(19) Europäisches Patentamt
European Patent Office
Office européen des brevets

(11) Publication number: **0 519 617 A1**

## (12) EUROPEAN PATENT APPLICATION

(21) Application number: **92305056.1**

(22) Date of filing: **02.06.92**

(51) Int. Cl.⁵: **C08L 51/06**, C08L 77/00, C08L 23/02

(30) Priority: **19.06.91 US 717556**

(43) Date of publication of application:
**23.12.92 Bulletin 92/52**

(84) Designated Contracting States:
**BE DE DK FR GB IT NL SE**

(71) Applicant: **CHEVRON RESEARCH AND TECHNOLOGY COMPANY**
**555 Market Street**
**San Francisco, California 94105(US)**

(72) Inventor: **Bacskai, Robert**
**254 Stanford Avenue**
**Kensington, California 94708(US)**

(74) Representative: **Nash, David Allan et al**
**Haseltine Lake & Co. Hazlitt House, 28 Southampton Buildings, Chancery Lane**
**London WC2A 1AT(GB)**

# (54) Polymer blends of polyolefin, polyamide and a modified ethylene copolymer.

(57) The invention provides a homogeneous, non phase-separated polymer blend comprising a blend of a first polymeric component comprising a modified ethylene copolymer, the first polymeric component having been grafted with an unsaturated carboxylic anhydride or an unsaturated carboxylic acid, or combinations thereof, or with an epoxide; a second polymeric component having OH, SH or $NHR^2$ groups where $R^2$ is H, $C_1$-$C_3$ alkyl, substituted $C_1$-$C_3$ alkyl; and a third polymeric component comprising an unmodified polyolefin, the first polymeric component being present in an amount sufficient so that the blend is non phase-separated. A method of providing a homogeneous blend of an unmodified polyolefin with a second polymeric component having OH, SH or $NHR^2$ groups is also set forth. Articles such as containers for foods and beverages utilizing such compositions and/or such method are provided.

EP 0 519 617 A1

## TECHNICAL FIELD

The present invention relates to a composition of matter which is a homogeneous polymer blend having oxygen barrier capabilities, to a method of preparing a homogeneous polymer blend, and to articles of manufacture formulated with such blends. The composition of matter is formable into bottles, containers, films and sheets for the packaging of oxygen sensitive foods and beverages.

## BACKGROUND OF THE INVENTION

A number of foods, drinks, chemicals, etc., are susceptible to deterioration, putrefaction, denaturation, or the like when brought into contact with the oxygen in air. A number of methods have been practiced in the past for preventing this from occurring. For example, deoxidants have been sealed in containers. Such deoxidants can comprise reductive organic compounds, for example, sulfoxilates, dithionates, or the like. The deoxidants are capable of absorbing oxygen. They can be put in a sealed container or wrapped with a permeable film, together with the foods, drinks, chemical, and the like.

For sealed containers such as food cans, beer cans, juice cans, and the like, the oxygen in the air in the head space or dissolved in the contents of the sealed containers can be replaced with inert gases such as nitrogen or carbon dioxide.

One specific attack on the problem of oxygen leading to deterioration of foods is discussed in European Patent Application 301 719 published February 1, 1989. The aforementioned patent application discloses a wall for a package, which wall comprises or includes a layer comprising a composition comprising a polymer and having oxygen scavenging properties. The composition scavenges oxygen through the metal-catalyzed oxidation of an oxidizable organic component. The oxidizable organic component is preferably itself a polymer and may be the only polymer in the composition. The preferred composition taught in the aforementioned patent application is a blend of 96% polyethylene terephthalate (PET) and 4% poly(m-xylyleneadipamide) containing 200 ppm cobalt as a catalyst. Rhodium and copper are also taught as being alternative catalysts. Polyamides such as MXD6 are taught as being oxidizable polymers which are of particular interest for use in the composition and process of the aforementioned patent application. The PET is taught as being useful in controlling the permeability to oxygen of the composition. While most of the examples and discussion in the patent application is concerned with the use of PET it should be noted that Examples 10-12 utilize polypropylene (PP) or polyethylene (PE) instead of PET.

Another European Patent Application of interest is Application No. 335 520 published on October 4, 1989. This application incorporates the teaching of European Patent Application 301 719 and utilizes the composition of that application in a sandwich form between other layers, which other layers may comprise a maleic anhydride modified polypropylene. However, there is no teaching of blending of a maleic anhydride modified polypropylene with an oxidizable polymer such as a polyamide or with a metal salt catalyst.

Another recent publication of interest is International publication No. WO 90/00504 which was published on January 25, 1990. This publication discloses a polymer composition for manufacturing containers, intermediate forms or part thereof for improving their oxygen barrier properties. The composition contains as an active component a metal compound having the capacity of scavenging oxygen and consisting of a metal ion having complexing properties and a polymer to which the metal ion is combined as a complex. The polymer composition, in admixture with a further polymer, can be molded into containers, intermediate forms or parts thereof. This publication discloses the use of mixtures of PET and a polyamide for producing plastic materials by injection molding. If such materials also include a metal which complexes with ligands originating from groups and/or atoms present in the polymer, a scavenger effect for oxygen is attained. Listed metals include iron, cobalt, nickel ruthenium, rhodium, palladium, osmium, iridium and platinum. Copper, manganese and zinc are also listed. In addition to the use of PET-polyamide mixtures the use of polyethylene, polypropylene, polyvinylchloride and their copolymers is mentioned. International Publication No. WO90/00578 includes a similar disclosure.

Ide and Hasegawa, J. Appl. Polym. Sci., vol. 18, pp. 963-974 (1974) discloses that, in the presence of maleic anhydride-grafted polypropylene, dispersibility of a polymer blend of isotactic polypropylene and nylon was obtained.

## DISCLOSURE OF INVENTION

Utilizing modified ethylene copolymers, which can be prepared, for example, by grafting a compound such as maleic anhydride or the like, acrylic acid, methacrylic acid, fumaric acid, maleic acid or an epoxide-containing compound, onto the ethylene copolymer, one can obtain homogenous, non phase-separated

blends of unmodified polyolefin with polyamides such as MXD6. Furthermore, when a metal salt is employed, the metal salt can be homogeneously dispersed throughout the resulting blend leading to improved oxygen scavenging capability. It should be noted that it is not necessary that all of the unmodified polyolefin be replaced with modified ethylene copolymer. Thus, the use of even a relatively small amount of modified ethylene copolymer, along with a relatively major amount of unmodified polyolefin, leads to the formation of a homogeneous non phase-separated blend. If unmodified polyolefin alone, unmixed with or instead of such a modified ethylene copolymer, is used, rather than at least an effective amount of such a modified ethylene copolymer, blending with MXD6 produces an inhomogeneous phase-separated blend. The blend of the present invention has superior oxygen barrier properties to that made using only unmodified polyolefins. The present invention thus allows the use of what are basically inexpensive unmodified polyolefins to produce containers and the like which have good oxygen scavenger capabilities. Note also that copolymers of olefins with other unsaturated monomers are also usable in accordance with the present invention and that the term "polyolefin" is, at times, used herein to include such copolymers.

In accordance with one embodiment of the present invention a composition of matter is provided which has oxygen barrier capabilities. The composition of matter comprises a homogeneous, non phase-separated blend of

a. a first polymeric component comprising a modified ethylene copolymer comprising a copolymer of ethylene and an acrylic acid or an ester of an acrylic acid and a $C_1$ to $C_{28}$ alcohol, the first polymeric component having been grafted with an unsaturated carboxylic anhydride or an unsaturated carboxylic acid such as acrylic acid, methacrylic acid, fumaric acid or maleic acid, alone or in combination, or with an epoxide;

b. a second polymeric component having OH, SH or $NHR^2$ groups where $R^2$ is H, $C_1$-$C_3$ alkyl or substituted $C_1$-$C_3$ alkyl; and

c. a third polymeric component comprising an unmodified polyolefin,

the first polymeric component being present in an amount sufficient so that the blend is homogeneous and non phase-separated.

In accordance with another embodiment of the invention a method is provided of preparing a homogeneous, non phase-separated blend of an unmodified polyolefin with a polymer having OH, SH or $NHR^2$ functionality. The method comprises blending the unmodified polyolefin with the polymer and with a modified ethylene copolymer comprising a copolymer of ethylene and an acrylic acid or an ester of an acrylic acid and a $C_1$ to $C_{28}$ alcohol, said copolymer having been grafted with an unsaturated carboxylic anhydride or an unsaturated carboxylic acid such as acrylic acid, methacrylic acid, fumaric acid or maleic acid, alone or combination, or with an epoxide, said modified ethylene copolymer being present in an amount sufficient to assure production of the homogeneous non phase-separated blend.

Articles of manufacture formulated using the above set forth compositions of matter and/or the above set forth blending method also constitute embodiments of the present invention.

## DETAILED DESCRIPTION OF THE INVENTION

The present invention is concerned with providing a composition of matter and articles of manufacture which can be formulated therefrom, the composition of matter being homogeneous and non phase-separated. The composition of matter also has oxygen barrier capabilities. The composition of the invention may be used for manufacturing containers such as beverage and food packages, intermediate forms or parts thereof with oxygen barrier properties. The compositions of the present invention, in contrast to related prior art compositions, provide homogenous non phase-separated blends when prepared by melt mixing techniques. It is believed that the better oxygen barrier properties are due to the formation of the homogenous non phase-separated blends.

The first polymeric component which forms a portion of the polymeric composition of the present invention comprises a modified ethylene copolymer, the modified ethylene copolymer having grafted thereto a plurality of side chains. The modified ethylene copolymer may be a copolymer of ethylene and an acrylic acid, e.g., acrylic acid or methacrylic acid, or a copolymer of ethylene and acrylic or methacrylic esters of linear, branched or cyclic alkanols having 1-28 carbon atoms. The modified ethylene copolymers are exemplified by ethylene-alkyl acrylate copolymers. The specific ethylene-alkyl acrylate copolymer employed in the process of the present invention is not critical and can include copolymers containing high weight percentages of alkyl acrylate or high weight percentages of ethylene. However, preferably, these copolymers contain from about 10-60 weight percent alkyl acrylate and from about 90-40 weight percent ethylene; and more preferably from about 15-30 weight percent alkyl acrylate and 85-70 weight percent ethylene, said weight percentages being based on the combined weight of the ethylene and alkyl acrylate.

Suitable copolymers generally have a melt index of about 0.1 to about 200; preferably from about 1 to 30; and more preferably from about 2 to 10. Additionally, suitable ethylene-alkyl acrylate copolymers can also contain stabilizers, such as UV stabilizers, anti-oxidants, coloring agents, etc., as well as minor amounts, i.e., 5% or less, of one or more saturated or unsaturated hydrocarbon components, such as propylene, butylene, hexa-1,4-diene, etc., provided that these additional components do not alter the basic properties of the copolymer. Suitable copolymers are commercially available. For example, a suitable copolymer containing about 80 weight percent ethylene and 20 weight percent methyl acrylate is available as PE-2207 from Chevron Chemical Company, San Francisco, California. The preparation of ethylene-methyl acrylate copolymers is disclosed in U.S. Patent No. 3,350,372 which is incorporated herein by reference. Also included within the term "ethylene-alkyl acrylate copolymers" are ethylene-alkyl acrylate copolymers obtained by chemical modification of the base copolymer, e.g., chlorosulfonated, chlorinated, oxidized, hydrolyzed, etc., ethylene-alkyl acrylate copolymers. Also, terpolymers such as ethylene-acrylate-maleic anhydride terpolymers and the like can serve as all or a portion of the first polymeric component.

The first polymeric component, i.e., the modified ethylene copolymer, can be formulated by, for example, reacting an unsaturated organic 1,2 or 1,3 dioic acid anhydride or the like, such as maleic anhydride (cis-butenedioic acid anhydride), with the ethylene copolymers, such as an ethylene-alkyl acrylate copolymer, described above. The reaction is conducted in the presence of a free radical catalyst such as benzoyl peroxide, dicumyl peroxide, 2,5-dimethyl-2,5-di(t-butylperoxy)hexane, 2,5-dimethyl-2,5-di(t-butylperoxy)hexyne-3, di-t-butyl peroxide, t-butylcumyl peroxide, or the like. Such reactions are well known to one of skill in the art. For example, they can be carried out in an extruder in accordance with the teachings of copending application Serial No. 395,105 filed August 17, 1989, the disclosure of which is incorporated herein by reference. The grafting can also be carried out separately from an extrusion process.

As an alternative, an appropriate unsaturated carboxylic acid, for example, acrylic acid, methacrylic acid, fumaric acid or maleic acid, can be grafted to the ethylene copolymer instead of, or in combination with the acid anhydride. The fumaric acid can be grafted to the ethylene copolymer by, for example, the procedures set out in U.S. Patent 4,026,967 which is incorporated by reference. The acrylic acid can be grafted as set forth in Modification of Polymers, Polymer Science and Technology, volume 21, page 171 (1982), Plenum Press, editors Carraher and Moore, which is also incorporated by reference. Methacrylic acid can be grafted similarly to acrylic acid. Maleic acid would generally be isomerized to fumaric acid for grafting.

Mixtures of the above and combinations of the above (by which is meant partially anhydride grafted and partially acid grafted, or partially grafted with more than one acid, ethylene copolymers) can likewise comprise the first polymeric component.

Alternatively, an epoxy-containing side chain may be grafted onto the ethylene copolymer utilizing an unsaturated epoxy compound as a starting material. This can be accomplished by, for example, reacting glycidyl methacrylate, peroxide and polymer as above. Generally, it is not satisfactory to graft an epoxide in combination with any of the other grafting agents or to utilize an epoxy-containing polymer in admixture with ethylene copolymer to which carboxylic acids or anhydrides have been grafted, as cross-linking will occur.

Literature methods for carrying out grafting of an epoxy-containing side chain can be found in Journal of Applied Polymer Science, 27, 425(1982), which is incorporated herein by reference.

The preferred composition of the invention is formulated by grafting maleic anhydride to an ethylene-alkyl acrylate copolymer to produce the first polymeric component.

The second polymeric component is one which is readily oxidizable by air at ambient temperature, especially in the presence of the metal salt which forms a part of the composition of matter of the invention. Further, the second polymeric component includes an active hydrogen, by which is meant a hydrogen attached to oxygen, sulfur or nitrogen. Thus, the hydrogen may be part of a hydroxyl group, an amine group or a thio group. In general, the second polymeric component can be represented by the formula:

```
-(polymer backbone)-
          |
          D
```

where D = OH, SH or $NHR^2$, D can be on a side chain or can be a chain terminating group of the polymer and more than one type of D can be attached to the polymer backbone and $R^2$ is H, $C_1$-$C_3$ alkyl or substituted $C_1$-$C_3$ alkyl. Thus, the second polymeric component can be a polyol, a polythiol, a polyamide, or the like.

The preferred second polymeric component will comprise a polyamide or copolyamide, the latter being a copolymer of polyamides and other polymers. The polymers can be aromatic or aliphatic. The preferred group of polyamides are the MX nylons, with very good results being attainable with MXD6 nylon. These polyamides contain at least 70,mol percent of structural units obtained from m-xylylenediamine alone or a xylylenediamine mixture containing m-xylylene-diamine and p-xylylenediamine and an $\alpha$, $\sigma$ aliphatic dicarboxylic acid having 6 to 10 carbon atoms. Such polymers have the ability to coordinate to the metal ions of the metal salt described herein. Thus, it is believed, promoting their own catalytic oxidation.

Examples of polymers as discussed above include the homopolymers such as poly-m-xylylene adipamide and poly-m-xylylene sebacamide, copolymers such as m-xylylene/p-xylylene adipamide copolymers, m-xylylene/p-xylylene pyperamide copolymer and m-xylylene/p-xylylene azelamide copolymers, and copolymers of these homopolymers or copolymer components and aliphatic diamines such as hexamethylenediamine, cyclic diamines such as piperazine, aromatic diamines such as p-bis(2-aminoethyl)benzene, aromatic dicarboxcylic acids such as terephthalic acid, lactams such as $\epsilon$-caprolactam, omega-aminocarboxylic acids such as omega-aminoheptoic acid and aromatic aminocarboxylic acids such a p-aminobenzoic acid.

The MX nylons may have incorporated polymers such as nylon 6, nylon 66, nylon 610 and nylon 11. One preferred aromatic polyamide is the polymer formed by the polymerization of m-xylylene-diamine $H_2NCH_2$-m-$C_6H_4$-$CH_2NH_2$ and adipic acid $HO_2C(CH_2)_4CO_2H$, for example a product manufactured and sold by Mitsubishi Gas Chemicals, Japan, under the designation MXD6. A preferred polyamide of an aliphatic nature is nylon 6.6.

The third polymeric component of the compositions of the present invention is an unmodified polyolefin. Useful unmodified polyolefins may be represented by the following formula:

$$-(CR_2CR_2)_m-$$

wherein $-(CR_2CR_2)_m-$ represents the polymer backbone with m being the degree of polymerization. R represents at each independent occurrence hydrogen or a $C_1$ to $C_4$ alkyl. Examples of such unmodified polyolefins include, but are not limited to, polyethylene (including high and low density polyethylenes as well as linear low density polyethylene), polypropylene, and the like.

The amount of the first and third polymeric components relative to the amount of the second polymeric component may vary within wide ranges. The proportions depend on a number of different factors such as the intended shelf life of the container, the intended barrier effect, economic factors, reuse aspects, and the like. Thus, the proportions between the first and third polymeric components and the second polymeric component may vary over a wide range, for example from about 1:50 to 50:1. Generally, however, for economic reasons the majority of the overall polymer blend will comprise the first and third polymeric components, and often these components will be present in an amount of 60% or more by weight, based on the combined weight of the first, second and third polymeric components.

The weight ratio of the first polymeric component to the second polymeric component, which is what determines that the resulting blend is homogeneous and single phase rather than non-homogeneous and phase-separated, may also fall within a large range. It is a function of the degree of grafting on the first polymeric component, the ratio of the first polymeric component to the third polymeric component, and the particular second polymeric component present. In essence, what is needed is that sufficient of the first polyolefin be present so that the required homogenous non phase-separated blend results. Good results can be obtained when the first polymeric component to second polymeric component weight ratio falls within a range from about 80:20 to about 20:80, but a wider weight ratio range such as, but not limited to, 95:5 to 5:95 will also give good results. Of course, the amount of each must be greater than zero.

The formation of ethylene copolymers which have compounds such as maleic anhydride, acrylic acid, methacrylic acid, fumaric acid, maleic acid or epoxy compounds grafted to them is known as are blends of at least some of such compounds with polyamides. Such blends are useful as adhesives and/or as high impact strength molding compounds. Furthermore, such blends may have fillers and reinforcing substances, processing auxiliaries, nucleating agents, pigments and stabilizers, including, inter alia, chalk, quartz, wollastonite, microvite, talcum, calcium stearate, titanium dioxide, carbon black, cadmium sulfide and sterically hindered phenols added to them prior to molding and/or prior to use as adhesives. Such compositions do not, however, act as oxygen scavengers and do not include metal compounds which would catalyze oxidation of the polyamide portion of the blend. Relevant discussions of such blends may be found in, for example, U.S. Patent No. 4,174,358 of Epstein, issued November 13, 1979, U.S. Patent 4,362,846 of Korber, et al., issued December 7, 1982 and in Canadian Patent Application 2,003,390 of Abe, et al., all of which are incorporated herein by reference.

In accordance with a preferred embodiment of the present invention, a metal salt is included in the blend. The catalytic metal of the metal compound forming the active component in the composition is selected from the group consisting of iron, cobalt, nickel, ruthenium, rhodium, palladium, osmium, iridium, platinum, copper, manganese and zinc. In accordance with a more preferred embodiment of the invention the metal comprises iron, cobalt or nickel, more preferably still, cobalt.

The metal salt may have substantially any anion which does not provide incompatibility problems with the other components or with any food or beverage with which it may be used. Thus, either inorganic or organic anions can be utilized. The metal salt should be relatively uniformly dispersible in the blend. Hence, metal salts wherein the anion is organic are preferred. Good results have been obtained utilizing octoate as the anion but the octoate was chosen primarily for convenience. Other useful anions include, among many others, 2-ethylhexanoate, naphthenate, dodecanate and hexadecanoate.

The composition of the invention may be prepared in any form, for example as particles or granules.

When employed, the amount of the metal present in the polymer composition in accordance with the present invention is not critical as long as the desired effect is obtained. The concentration appropriate in each case can be readily determined by one skilled in the art dependent upon the desired shelf life, etc. Without limitation it has been found that an appropriate amount of the metal would be from about 50 to about 20,000 ppm weight of metal, preferably from about 100 to about 500 ppm. The lower limit is determined by the desired barrier effect, how rapidly it is intended to be attained, the particular first polymeric component utilized, the goods to be packed in the container, and the like. The upper limit is dictated by factors such as economy and toxicity.

Articles manufactured from a composition in accordance with the present invention present very high oxygen barrier properties, especially when the metal salt is utilized. In other words, they provide a substantial capacity to withstand the passage of oxygen. When the metal salt is employed, it is believed that a "scavenging" effect is achieved through the formation of an active metal complex, which is only possible if the polymer composition contains groups and/or atoms which have the capacity to coordinate to the metal ion and the polymer chain(s) has the ability to occupy a conformation wherein the groups and/or atoms are present in the correct positions in relation to the metal ion. Another prerequisite is that the metal ion be present at a location in the molecular structure where forming of the complex is possible. The metal complex has ligands originating from groups and/or atoms present in the polymer composition or formed from it.

The invention will be better understood by reference to the following illustrative experimental examples.

Example 1

Prior Art Compositions

Table 1 lists various high density polyethylene(HDPE)-MXD6 blends which were prepared by melt mixing these two components using a twin screw extruder at 270 °C. Scanning electron microscopy (SEM) was performed on each of the blends and the results are indicated in Table 1.

Table 1

| Blend | SEM Results |
|---|---|
| 20% HDPE<br>80% MXD6 | A continuous phase (probably MXD6) and spheroids of another phase (probably HDPE) |
| 50% HDPE<br>50% MXD6 | A continuous phase and spheroids of another phase |
| 80% HDPE<br>20% MXD6 | A continuous phase (probably HDPE) and spheroids of another phase (probably MXD6) |

The high density polyethylene (HDPE) used was a commercial product of Chevron Chemical Company, Grade 9122. It has a melt index of 48g/10 minutes at 190 °C, 2.16kg. The MXD6 used was a commercial product of Mitsubishi Gas Chemical Company, Grade 6014. It has a melt index of 27g/10 minutes at 275 °, 2.16kg.

As will be noted by reference to Table 1, the prior art polyethylene-MXD6 blends are inhomogeneous and show phase-separation.

Example 2

Compositions Of The Invention

Maleic anhydride (MAH) grafted polyolefin was prepared by reacting HDPE Grade 9122, 1 weight percent MAH and 0.1 weight percent 2,5-dimethyl-2,5-di-(t-butylperoxy)hexane in a twin screw extruder at 180°C. The resulting product had a melt index of 2.2g/10 minutes. The amount of MAH grafted by this procedure was 0.63 weight percent. The rest of the MAH was evaporated during the reaction. This was then melt mixed in the same twin-screw extruder and under the same conditions as in Example 1 with MXD6 and high density polyethylene to produce the blend indicated in Table 2.

Table 2

| Blend | SEM Results |
|---|---|
| 80% HDPE<br>15% MAH grafted HDPE<br>5% MXD6<br>200 ppm Co | A continuous phase |
| 65% HDPE<br>30% MAH grafted HDPE<br>5% MXD6<br>200 ppm Co | A continuous phase |

INDUSTRIAL APPLICABILITY

The present invention provides a composition useful for making articles of manufacture with excellent oxygen barrier characteristics from inexpensive and readily available polyolefins and provides such articles of manufacture. The articles of manufacture, which can be used as food or beverage containers, exhibit particularly good oxygen barrier capabilities and are not phase-separated when blended with polyamide type polymers and a metal salt.

While the invention has been described in connection with specific embodiments thereof, it will be understood that it is capable of further modification, and this application is intended to cover any variations, uses, or adaptations of the invention following, in general, the principles of the invention and including such departures from the present disclosure as come within known or customary practice in the art to which the invention pertains and as may be applied to the essential features hereinbefore set forth, and as fall within the scope of the invention and the limits of the appended claims.

**Claims**

**1.** A homogeneous, non phase-separated composition comprising a blend of:

a. a first polymeric component comprising a modified ethylene copolymer comprising a copolymer of ethylene and an acrylic acid or an ester of an acrylic acid and a $C_1$ to $C_{28}$ alcohol, the first polymeric component having been grafted with an unsaturated carboxylic anhydride or an unsaturated carboxylic acid such as acrylic acid, methacrylic acid, fumaric acid or maleic acid, alone or in combination, or with an epoxide;

b. a second polymeric component having OH, SH or $NHR^2$ groups where $R^2$ is H, $C_1$-$C_3$ alkyl or substituted $C_1$-$C_3$ alkyl; and

c. A third polymeric component comprising an unmodified polyolefin,

the first polymeric component being present in an amount sufficient so that the blend is homogeneous and non phase-separated.

**2.** A composition according to claim 1, wherein the first polymeric component comprises an ethylene-alkyl acrylate copolymer modified with maleic anhydride.

**3.** A composition according to claim 2, wherein the ethylene-alkyl acrylate copolymer comprises an

ethylene-methyl acrylate copolymer.

**4.** A composition according to any preceding claim, wherein the second polymeric component comprises a polyamide.

**5.** A composition according to claim 4, wherein the second polymeric component comprises MXD6 nylon.

**6.** A composition according to any preceding claim, wherein the third polymeric component comprises polyethylene, polypropylene, polybutylene or copolymers thereof.

**7.** A composition according to any preceding claim, wherein the first polymeric component is an ethylene-alkyl acrylate copolymer modified with maleic anhydride, the second polymer component is MXD6 nylon, and the third polymeric component is polyethylene.

**8.** An article of manufacture produced by forming the composition of any preceding claim into a desired shape.

**9.** A method for preparing a homogeneous, non phase-separated blend according to claim 1, said method comprising blending

a. a first polymeric component comprising a modified ethylene copolymer comprising a copolymer of ethylene and an acrylic acid or an ester of an acrylic acid and a $C_1$ to $C_{28}$ alcohol, the first polymeric component having been grafted with an unsaturated carboxylic anhydride or an unsaturated carboxylic acid such as acrylic acid, methacrylic acid, fumaric acid of maleic acid, alone or in combination, or with an epoxide;

b. a second polymeric component having OH, SH or $NHR^2$ groups where $R^2$ is H, $C_1$-$C_3$ alkyl or substituted $C_1$-$C_3$ alkyl; and

c. a third polymeric component comprising an unmodified polyolefin,

the first polymeric component employed in an amount sufficient so that the blend is homogeneous and non phase-separated.

**10.** A method as claimed in claim 9, wherein the first polymeric component comprises an ethylene-alkyl acrylate copolymer modified with maleic anhydride.

**11.** A method as claimed in claim 10, wherein the ethylene-alkyl acrylate copolymer comprises an ethylene-methyl acrylate copolymer.

**12.** A method as claimed in any one of claims 9 to 11, wherein the second polymeric component comprises a polyamide.

**13.** A method as claimed in claim 12, wherein the second polymeric component comprises MXD6 nylon.

**14.** A method as claimed in any one of claims 9 to 13, wherein the third polymeric component comprises polyethylene, polypropylene, polybutylene or copolymers thereof.

**15.** A method as claimed in any one of claims 9 to 14, wherein the first polymeric component is an ethylene-alkyl acrylate copolymer modified with maleic anhydride, the second polymer component is MXD6 nylon, and the third polymeric component is polyethylene.

European Patent Office

# EUROPEAN SEARCH REPORT

Application Number

EP 92 30 5056

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| X | WO-A-9 012 062 (NESTE OY)<br>* page 4, line 36 - page 5, line 12; claims 1,7,8 * | 1-15 | C08L51/06<br>C08L77/00<br>C08L23/02 |
| X | WO-A-9 012 063 (NESTE OY)<br>* page 5, line 1 - line 14; claims 1,7,8 * | 1-15 | |
| X | EP-A-0 280 455 (DU PONT CANADA INC)<br>* claims 1,2,9,12 * | 1-15 | |
| A | DATABASE CHEMICAL ABSTRACTS, (HOST: STN), 1985, NØ 105(2):7586R, COLUMBUS, OHIO, US;<br>& JP-A-60,243,116 (KUREHA CHEMICAL INDUSTRY CO. LTD) 3 DEC 1985<br>* ABSTRACT * | 1 | |
| A | DATABASE CHEMICAL ABSTRACTS, (HOST:STN), 1984, NØ102(6):47008Y, COLUMBUS, OHIO, US;<br>& JP-A-59,140,054 (MITSUBISHI PETROCHEMICAL CO., LTD) 11 AUG 1984<br>* ABSTRACT * | 1 | TECHNICAL FIELDS SEARCHED (Int. Cl.5 )<br>C08L |

The present search report has been drawn up for all claims

| Place of search | Date of completion of the search | Examiner |
|---|---|---|
| THE HAGUE | 14 AUGUST 1992 | IRAEGUI RETOLAZA E. |

**CATEGORY OF CITED DOCUMENTS**

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)